# EUROPÄISCHE PATENTSCHRIFT

(11) **EP 0 586 429 B1**
(45) Veröffentlichungstag und Bekanntmachung des Hinweises auf die Patenterteilung: **28.02.1996**
(21) Anmeldenummer: 92910203.6
(22) Anmeldetag: 20.05.1992
(51) Int. Cl.: C11D 1/83

(54) **FLÜSSIGE, GIESS- UND PUMPFÄHIGE TENSIDZUBEREITUNG**
POURABLE AND PUMPABLE LIQUID SURFACTANT PREPARATION
PREPARATION TENSIOACTIVE LIQUIDE APTE A L'ECOULEMENT ET AU POMPAGE

(30) Priorität: 29.05.1991 DE 4117689
(43) Veröffentlichungstag der Anmeldung: 16.03.1994
(73) Patentinhaber: Henkel Kommanditgesellschaft auf Aktien, D-40191 Düsseldorf (DE)
(72) Erfinder: GIESEN, Brigitte, D-4000 Düsseldorf 1 (DE); SCHMID, Karl-Heinz, D-4020 Mettmann (DE); SYLDATH, Andreas, D-4000 Düsseldorf 13 (DE)
(86) Internationale Anmeldenummer: EP9201119
(87) Internationale Veröffentlichungsnummer: WO9221742

(56) Entgegenhaltungen:
- EP-A- 0 105 556
- EP-A- 0 355 551
- WO-A-92/02604

## Beschreibung

Die vorliegende Erfindung betrifft konzentrierte Tensidzubereitungen aus Alkylglykosiden und Alkylsulfaten als stabile, fließ- und pumpfähige Flüssigkeiten sowie deren Verwendung als Vorgemische zur Herstellung von flüssigen Wasch- und Reinigungsmitteln.

Daß Alkylglykoside mit langkettigen Alkylgruppen zu den nichtionischen Tensiden gehören, ist seit langer Zeit bekannt. Ebenso weiß der Fachmann, wie zum Beispiel in A.M. Schwartz, J.W. Perry, Surface Active Agents, Vol. I, Interscience Publishers, 1949, Seite 372 beschrieben, daß Tensidmischungen in der Regel synergistische Effekte aufweisen und oft bessere Reinigungseigenschaften besitzen, als sich aus der Summe der Werte der Einzelkomponenten ergeben würde.

Waschmittel, die Alkylglykoside in Kombination mit wenigstens einem üblichen anionischen Tensid im Verhältnis 1 : 10 bis 10 : 1 enthalten, werden in der europäischen Patentanmeldung EP 070 074 beschrieben. Waschmittel, die Alkylglykoside und Aniontenside enthalten, sind auch aus der europäischen Patentanmeldung EP 092 877 bekannt. Des weiteren sind aus der europäischen Patentanmeldung EP 105 556 flüssige Waschmittel bekannt, die Alkylglykoside, bestimmte andere nichtionische Tenside und anionische Tenside enthalten. Aus der internationalen Patentanmeldung W0 86/02943 sind alkylglykosidhaltige Flüssigwaschmittel bekannt, die übliche Aniontenside enthalten. Aus der europäischen Patentanmeldung EP 132 043 ist ein Verfahren zur Herstellung von Alkylglykosiden unter Einsatz katalytischer Mengen eines Aniontensids in dessen Säureform bekannt. In der europäischen Patentanmeldung EP 132 046 wird vorgeschlagen, ein derartiges Herstellungsverfahren durch Zugabe bestimmter Basen nach der eigentlichen Reaktion zur Neutralisation des Katalysators zu modifizieren.

Aus den genannten Dokumenten geht in keiner Weise hervor, daß die Eigenschaften wäßriger Alkylglykosid-Zubereitungen, insbesondere ihre Flieβfähigkeit, aber auch ihre Reinigungsleistung, durch den Zusatz sehr geringer Mengen bestimmter Aniontenside drastisch verbessert werden können.

Bei der Herstellung flüssiger Wasch- und Reinigungsmittel werden die einzelnen Komponenten in der Regel als flieβfähige Lösungen eingesetzt. Die für die Mischung zum fertigen Mittel vorgesehenen Komponenten sollen einen möglichst hohen Aktivsubstanzgehalt aufweisen und gleichzeitig leicht handhabbar sein, das heißt, sie sollen möglichst flieβfähig und leicht pumpbar sein und eine möglichst hohe Lagerstabilität besitzen. Alkylglykoside fallen normalerweise als hochviskose Pasten an.

Der vorliegenden Erfindung lag demnach die Aufgabe zugrunde, eine lagerstabile, flüssige, fließ- und pumpfähige Alkylglykosid-Zubereitung zu entwickeln, die durch ihre leichte Handhabbarkeit bei der Herstellung von Wasch- und Reinigungsmitteln eingesetzt werden kann und möglichst geringe Mengen an nicht-alkylglykosidischer Aktivsubstanz enthält.

Diese Aufgabe wird durch eine wäßrige Mischung aus bestimmten Mengen an Alkylglykosid und bestimmtem Aniontensid gelöst.

Die erfindungsgemäßen Alkylglykosidzubereitungen sind wäβrige Mischungen, die im wesentlichen aus
20 Gew.-% bis 60 Gew.-% eines Alkylglykosids der Formel I,

   R¹-O(G)ₙ (I)

   in der R¹ einen Alkylrest mit 8 bis 22 C-Atomen, G eine Glykose-Einheit und n eine Zahl zwischen 1 und 10 bedeuten,
0,1 Gew.-% bis 3 Gew.-% eines Aniontensids vom Sulfat- oder Sulfonat-Typ, ausgewählt aus der Gruppe umfassend Alkylsulfate, Ethersulfate, Alkansulfonate, α-Sulfofettsäuren, deren Carbonsäureester, Sulfonierungsprodukte von Alkylbenzolen, Alkenen oder ungesättigen Fettsäuren sowie deren Gemische, wobei das Gewichtsverhältnis von Alkylglykosid gemäß Formel I zu Sulfat und/oder Sulfonat 200 : 1 bis 20 : 1 beträgt, und
37 Gew.-% bis 79,9 Gew.-% Wasser bestehen.

Vorzugsweise enthalten die erfindungsgemäßen Alkylglykosid-Zubereitungen 40 Gew.-% bis 70 Gew.-%, insbesondere 45 Gew.-% bis 65 Gew.-% Wasser, 30 Gew.-% bis 60 Gew.-%, insbesondere 35 Gew.-% bis 55 Gew.-% Alkylglykosid gemäß Formel I und 0,2 Gew.-% bis 2 Gew.-%, insbesondere 0,5 Gew.-% bis 1 Gew.-% Sulfat und/oder Sulfonat. Das Gewichtsverhältnis von Alkylglykosid zu Aniontensid liegt dabei vorzugsweise im Bereich von 100 : 1 bis 50 : 1.

Die für die erfindungsgemäßen Tensidmischungen geeigneten Alkylglykoside und ihre Herstellung werden zum Beispiel in den europäischen Patentanmeldungen EP 92 355, EP 301 298, EP 357 969 und EP 362 671 oder der USamerikanischen Patentschrift US 3 547 828 beschrieben. Bei den Glykosidkomponenten ((G)ₙ in Formel I) derartiger Alkylglykoside handelt es sich um Oligo- oder Polymere aus natürlich vorkommenden Aldose- oder Ketose-Monomeren, zu denen insbesondere Glucose, Mannose, Fruktose, Galaktose, Talose, Gulose, Altrose, Allose, Idose, Ribose, Arabinose, Xylose und Lyxose gehören. Die aus derartigen glykosidisch verknüpften Monomeren bestehenden Oligomere werden außer durch die Art der in ihnen enthaltenen Zucker durch deren Anzahl, den sogenannten Oligomerisierungsgrad, charakterisiert. Der Oligomerisierungsgrad (n in Formel I) nimmt als analytisch zu ermittelnde Größe im allgemeinen gebrochene Zahlenwerte an; er liegt bei Werten zwischen 1 und 10, bei den vorzugsweise eingesetzten Alkylglykosiden unter einem Wert von 1,5, insbesondere zwischen 1,2 und 1,4. Bevorzugter Monomer-Baustein ist wegen der guten Verfügbarkeit Glucose.

Der Alkylteil (R¹ in Formel I) der in den erfindungsgemäßen Zubereitungen enthaltenen Alkylglykoside stammt bevorzugt ebenfalls aus leicht zugänglichen Derivaten nachwachsender Rohstoffe, insbesondere aus Fettalkoholen, obwohl auch deren verzweigtkettige Isomere, insbesondere sogenannte Oxoalkohole, zur Herstellung verwendbarer Alkylglykoside eingesetzt werden können. Brauchbar sind demgemäß insbesondere die primären Alkohole mit linearen Octyl-, Decyl-, Dodecyl-, Tetradecyl-, Hexadecyl- oder Octadecylresten sowie deren Gemische. Besonders geeignete Alkylglykoside enthalten einen Kokosfettalkylrest, das heißt Mischungen mit im wesentlichen R¹=Dodecyl und R¹=Tetradecyl.

Die Alkylglykoside können herstellungsbedingt geringe Mengen, beispielsweise 1 bis 2 %, an nicht umgesetztem freiem langkettigem Alkohol enthalten.

Als für den Einsatz in den erfindungsgemäßen Tensidzubereitungen geeignete Aniontenside vom Sulfat- oder Sulfonat-Typ kommen Alkylsulfate, Sulfatierungsprodukte alkoxylierter Alkanole (sogenannte Ethersulfate), Alkansulfonate, α-Sulfofettsäuren, deren Carbonsäureester, sowie Sulfonierungsprodukte von Alkylbenzolen, Alkenen und ungesättigen Fettsäuren in Frage, wobei die Sulfatierungsprodukte linearer oder verzweigtkettiger, gegebenenfalls alkoxylierter Alkohole vorzugsweise eingesetzt werden. Besonders geeignet sind die oberflächenaktiven Sulfate von gegebenenfalls ethoxylierten Alkoholen gemäß Formel II,

R-O-(CH₂CH₂O)ₚ-SO₃X (II)

in der R einen Alkylrest mit 12 bis 22 C-Atomen, vorzugsweise mit 12 bis 16 C-Atomen, p eine Zahl von 0 bis 20 und X ein Alkali- oder Ammoniumion bedeuten.

Die genannten Aniontenside sind seit langer Zeit als gut wirksam bekannt. Überraschend war allerdings, daß durch den Zusatz sehr geringer Mengen derartiger Aniontenside die an sich schon hohe Reinigungsleistung der Alkylglykosid-Tenside noch deutlich gesteigert werden kann. Da eine derartig starke Steigerung der Reinigungsleistung bei Zusatz equivalent niedriger Mengen an nichtionischen Tensiden, beispielsweise ethoxylierten Fettalkoholen, nicht eintritt, muß dieser an den erfindungsgemäßen Tensidzubereitungen festgestellte Befund umso mehr überraschen.

Erfindungsgemäß brauchbare Aniontenside vom Sulfat- oder Sulfonat-Typ können in bekannter Weise durch Reaktion mit Sulfonierungs- beziehungsweise Sulfatierungsmitteln, insbesondere mit Schwefeltrioxid oder Chlorsulfonsäure, und anschließende Neutralisation, vorzugsweise mit Alkali-, Ammonium- oder Alkyl- beziehungsweise Hydroxyalkyl-substituierten Ammoniumbasen, hergestellt werden. Insbesondere die Alkylsulfate gemäß Formel II können durch Reaktion der entsprechenden Alkoholkomponente mit einem üblichen Sulfatierungsreagenz, beispielsweise Schwefeltrioxid oder Chlorsulfonsäure, und anschließende Neutralisation hergestellt werden. Der Alkylteil derartiger Sulfate kann bis zu 20 Ethylenglykoleinheiten tragen, wobei dieser Ethoxylierungsgrad (p in Formel II) vorzugsweise einen Wert von 1 bis 5 besitzt. Derartige Ethoxylate können in bekannter Weise durch Umsetzung der entsprechenden Alkohole mit Ethylenoxid erhalten werden.

Die für die Einarbeitung in die erfindungsgemäßen Zubereitungen geeigneten Sulfofettsäuresalze sind neutralisierte Derivate der mindestens eine Doppelbindung enthaltenden Fettsäuren mit 8 bis 22 C-Atomen. Zu diesen gehören insbesondere die Sulfonierungsprodukte von Lauroleinsäure, Myristoleinsäure, Palmitoleinsäure, Ölsäure, Gadoleinsäure und Erucasäure. Derartige Sulfofettsäuresalze werden durch Umsetzung der ungesättigten Fettsäuren mit einem Sulfonierungsmittel und anschließende Neutralisation und Hydrolyse mit üblichen Basen nach bekannten Verfahren, wie sie zum Beispiel in der britischen Patentschrift GB 1 278 421 oder der internationalen Patentanmeldung WO 90/01972 beschrieben sind, hergestellt. Dabei entstehen Gemische der eine Sulfo- und eine Hydroxygruppe tragenden gesättigten Fettsäuren mit durch formale Eliminierung eines Molequivalents Wasser aus diesen entstehenden ungesättigten, eine Sulfogruppe tragenden Fettsäuren. Durch analoge Reaktion können aus Alkenen mit vorzugsweise 12 bis 22 C-Atomen oberflächenaktive Hydroxyalkylsulfonate beziehungsweise Alkensulfonate erzeugt werden.

Bei den erfindungsgemäß einsetzbaren Alkansulfonaten handelt es sich um Substanzen, die durch Sulfoxidation von Kohlenwasserstoffen, welche vorzugsweise 10 bis 20 C-Atome enthalten, gewonnen werden. Dabei entstehen in der Regel Produkte mit statistischer Verteilung der Sulfonsäure-Substituenten, die gewünschtenfalls in bekannter Weise getrennt werden können. Für die erfindungsgemäßen Mischungen sind sekundäre Alkansulfonate mit 12 bis 17 C-Atomen besonders geeignet. Als Kationen kommen auch in diesem Fall insbesondere solche aus der Gruppe der Alkaliionen, Ammonium- oder Alkylbeziehungsweise Hydroxyalkyl-substituierten Ammoniumionen in Betracht.

Bei den in den erfindungsgemäßen Erzeugnissen verwendbaren Alkylbenzolsulfonaten handelt es sich vorzugsweise um Verbindungen mit 8 bis 16 C-Atomen im Alkylteil.

Die Herstellung der erfindungsgemäßen Tensidzubereitungen bereitet keinerlei Schwierigkeiten. Sie kann problemlos durch einfaches Mischen der Einzelkomponenten, die als solche oder vorzugsweise in wäßriger Lösung vorliegen können, erfolgen.

Die erfindungsgemäßen Erzeugnisse zeichnen sich durch ihre niedrigen Viskositäten, ihre leichte Fließfähigkeit und Pumpbarkeit und ihre hohe Lagerstabilität aus. Die Viskosität der erfindungsgemäßen Zubereitungen liegt bei Raumtemperatur im allgemeinen bei 1 000 mPa.s bis 10 000 mPa.s. Sie weisen in der Regel basische pH-Werte, etwa von 8 bis 12, auf, können jedoch durch Zugabe üblicher Säuren, insbesondere Zitronensäure, auf weitgehend neutrale pH-Werte eingestellt werden, ohne ihre vorteilhaften Eigenschaften zu verlieren.

Die erfindungsgemäßen Tensid-Zubereitungen können, direkt oder nach Verdünnen mit Wasser, für technische Anwendungen, zum Beispiel als Flotationshilfsmittel oder Bohrspülungen, eingesetzt werden. Vorzugsweise werden sie jedoch als lagerstabile, fließfähige und pumpbare Vorgemische zur Herstellung flüssiger Wasch- und Reinigungsmittel verwendet, zu denen insbesondere Feinwaschmittel, Wollwaschmittel und Geschirrspülmittel, aber auch Shampoos gehören. Derartige Mittel können in einfacher Weise durch Verdünnen mit Wasser auf die gewünschte Aktivsubstanzkonzentration hergestellt werden. Die Zugabe anderer in derartigen Mitteln üblicher Bestandteile, zu denen insbesondere Buildersubstanzen, wie Zeolithe und Schichtsilikate, Korrosionsinhibitoren, Bleichmittel, Bleichaktivatoren, optische Aufheller, Enzyme, Vergrauungsinhibitoren, antimikrobielle Wirkstoffe, wassermischbare Lösungsmittel, Abrasivmittel, Schaumstabilisatoren, Konservierungsmittel, pH-Regulatoren, Farb- und Duftstoffe sowie zusätzliche Tenside gehören, ist möglich.

### Beispiele

### Beispiel 1

Durch einfaches Mischen der Komponenten, die als wäßrige Lösungen vorlagen, wurden die nachfolgend in Tabelle durch ihre Zusammensetzung charakterisierten erfindungsgemäßen Tensidzubereitungen M1 bis M6 hergestellt, die bei 20 °C Viskositäten (Kugelfallviskosimeter nach Höppler) im Bereich von 2000 mPa.s bis 5000 mPa.s besaßen.

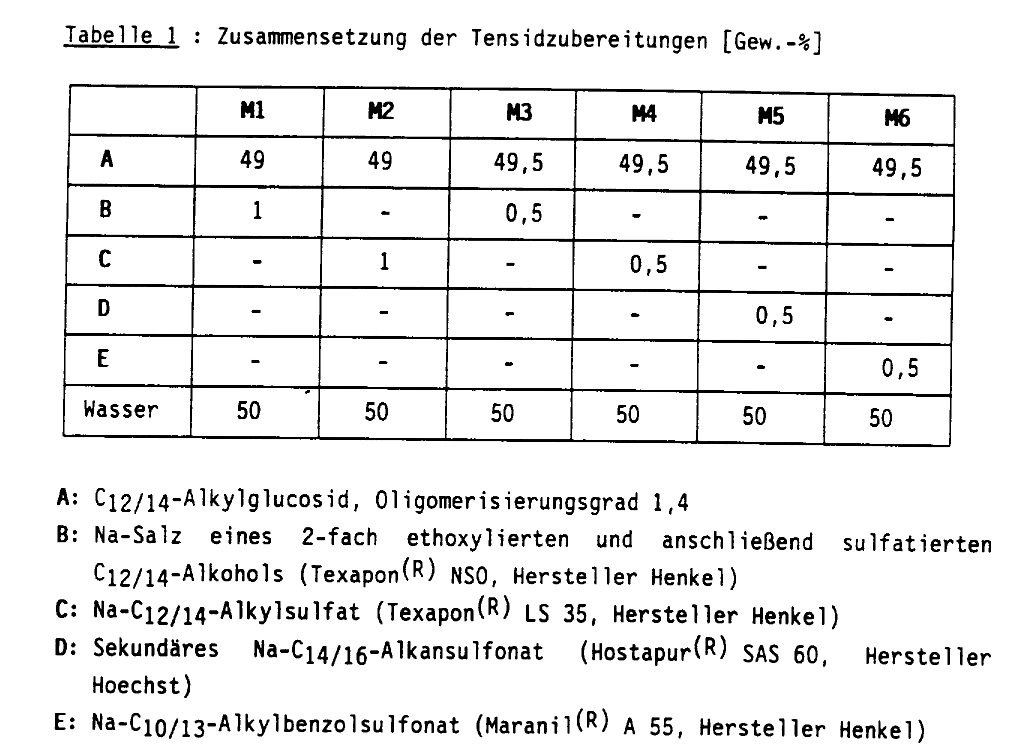

### Beispiel 2

Zur Demonstration der Reinigungsleistung der erfindungsgemäßen Erzeugnisse **M1** bis **M6** wurde der in "Fette, Seifen, Anstrichmittel", 74 (1972), 163, beschriebene Tellertest durchgeführt. Es wurden Lösungen von jeweils 0,075 g Aktivsubstanz pro Liter Wasser mit einer Wasserhärte von 16°d (160 mg Ca0/Liter) eingesetzt. Die mit Rindertalg (2g/Teller) angeschmutzten Teller wurden nach 24 Stunden Lagerung bei Raumtemperatur mittels einer rotierenden Spülbürste bei 50 °C gespült. Als Vergleich wurde Ausgangsmaterial **A** unter den gleichen Bedingungen getestet. Unter diesen Bedingungen konnten mit jeweils 5 Litern Reinigungslösung unter Verwendung von reinem **A** 9 Teller einwandfrei gespült werden, während die entsprechende Zahl unter Verwendung eines erfindungsgemäßen Mittels **M1** bis **M6** bei jeweils 11 Tellern lag.

## Patentansprüche

1. Wäßrige, fließfähige und pumpbare Alkylglykosid-Zubereitung, dadurch gekennzeichnet, daß sie im wesentlichen besteht aus
20 Gew.-% bis 60 Gew.-% eines Alkylglykosids der Formel I,
R¹-O(G)ₙ (I)
in der R¹ einen Alkylrest mit 8 bis 22 C-Atomen, G eine Glykose-Einheit und n eine Zahl zwischen 1 und 10 bedeuten,
0,1 Gew.-% bis 3 Gew.-% eines Aniontensids vom Sulfat- oder Sulfonat-Typ, ausgewählt aus der Gruppe umfassend Alkylsulfate, Ethersulfate, Alkansulfonate, α-Sulfofettsäuren, deren Carbonsäureester, Sulfonierungsprodukte von Alkylbenzolen, Alkenen oder ungesättigen Fettsäuren sowie deren Gemische, wobei das Gewichtsverhältnis von Alkylglykosid gemäß Formel I zu Sulfat und/oder Sulfonat 200 : 1 bis 20 : 1 beträgt, und
37 Gew.-% bis 79,9 Gew.-% Wasser.

2. Erzeugnis nach Anspruch 1, dadurch gekennzeichnet, daß es 40 Gew.-% bis 70 Gew.-%, insbesondere 45 Gew.-% bis 65 Gew.-% Wasser, 30 Gew.-% bis 60 Gew.-%, insbesondere 35 Gew.-% bis 55 Gew.-% Alkylglykosid gemäß Formel I und 0,2 Gew.-% bis 2 Gew.-%, insbesondere 0,5 Gew.-% bis 1 Gew.-% Sulfat und/oder Sulfonat enthält.

3. Erzeugnis nach Anspruch 1 oder 2, dadurch gekennzeichnet, daß es Alkylglykosid gemäß Formel I und Sulfat und/oder Sulfonat im Gewichtsverhältnis von 100 : 1 bis 50 : 1 enthält.

4. Erzeugnis nach einem der Ansprüche 1 bis 3, dadurch gekennzeichnet, daß es ein oberflächenaktives Sulfat eines gegebenenfalls ethoxylierten Alkohols gemäß Formel II,
R-O-(CH₂CH₂O)ₚ-SO₃X (II)
in der R einen Alkylrest mit 12 bis 22 C-Atomen, p eine Zahl von 0 bis 20 und X ein Alkali- oder Ammoniumion bedeuten, enthält.

5. Erzeugnis nach einem der Ansprüche 1 bis 4, dadurch gekennzeichnet, daß das Alkylglykosid der Formel I einen Oligomerisierungsgrad n unter 1,5, insbesondere von 1,2 bis 1,4, besitzt.

6. Erzeugnis nach einem der Ansprüche 1 bis 5, dadurch gekennzeichnet, daß das Alkylglykosid der Formel I ein Alkylglucosid ist.

7. Erzeugnis nach einem der Ansprüche 4 bis 6, dadurch gekennzeichnet, daß das Sulfat der Formel II einen Alkylrest R mit 12 bis 16 C-Atomen besitzt.

8. Erzeugnis nach einem der Ansprüche 4 bis 7, dadurch gekennzeichnet, daß das Sulfat der Formel II einen Ethoxylierungsgrad p von 1 bis 5 besitzt.

9. Verwendung des Erzeugnisses nach einem der Ansprüche 1 bis 8 als lagerstabiles, fließfähiges, pumpbares Vorgemisch für die Herstellung von flüssigen Wasch- oder Reinigungsmitteln.

## Claims

1. A water-containing flowable and pumpable alkyl glycoside preparation, characterized in that it consists essentially of
20% by weight to 60% by weight of an alkyl glycoside corresponding to formula I:
R¹-O(G)ₙ (I)
in which R¹ is a C₈-₂₂ alkyl radical, G is a glycose unit and n is a number of 1 to 10,
0.1 to 3% by weight of an anionic surfactant of the sulfate or sulfonate type selected from the group consisting of alkyl sulfates, ether sulfates, alkane sulfonates, α-sulfofatty acids, carboxylic acid esters thereof, sulfonation products of alkyl benzenes, alkenes or unsaturated fatty acids and mixtures thereof, the ratio by weight of alkyl glycoside corresponding to formula (I) to sulfate and/or sulfonate being 200:1 to 20:1, and
37% by weight to 79.9% by weight of water.

2. A product as claimed in claim 1, characterized in that it contains 40% by weight to 70% by weight and, more particularly, 45% by weight to 65% by weight of water; 30% by weight to 60% by weight and, more particularly, 35% by weight to 55% by weight of alkyl glycoside corresponding to formula (I); and 0.2% by weight to 2% by weight and, more particularly, 0.5% by weight to 1% by weight of sulfate and/or sulfonate.

3. A product as claimed in claim 1 or 2, characterized in that it contains alkyl glycoside corresponding to formula (I) and sulfate and/or sulfonate in a ratio by weight of 100:1 to 50:1.

4. A product as claimed in any of claims 1 to 3, characterized in that it contains a surface-active sulfate of an optionally ethoxylated alcohol corresponding to formula (II) :
R-O-(CH₂CH₂O)ₚ-SO₃X (II)
in which R is a C₁₂₋₂₂ alkyl radical, p is a number of 0 to 20 and X is an alkali metal or ammonium ion.

5. A product as claimed in any of claims 1 to 4, characterized in that the alkyl glycoside corresponding to formula (I) has a degree of oligomerization n below 1.5 and, more particularly, from 1.2 to 1.4.

6. A product as claimed in any of claims 1 to 5, characterized in that the alkyl glycoside corresponding to formula (I) is an alkyl glucoside.

7. A product as claimed in any of claims 4 to 6, characterized in that the sulfate corresponding to formula (II) contains a C₁₂₋₁₆ alkyl radical R.

8. A product as claimed in any of claims 4 to 7, characterized in that the sulfate corresponding to formula (II) has a degree of ethoxylation p of 1 to 5.

9. The use of the product claimed in any of claims 1 to 8 as a storable, flowable and pumpable compound for the production of liquid detergents.

## Revendications

1. Préparation aqueuse, apte à l'écoulement et au pompage, d'alcoylglycoside caractérisée en ce qu'elle est formée essentiellement de :
- 20 % à 60 % en poids d'un alkylglycoside de la formule I,
R¹-O(G)ₙ (I)
dans laquelle R¹ signifie un radical alcoyle ayant de 8 à 22 atomes de carbone, G une unité de glycose et n un nombre entier entre 1 et 10,
- 0,1 à 3 % en poids d'un agent tensioactif anionique du type sulfate ou sulfonate choisi dans le groupe qui comprend des alcoylsulfates, des éthersulfates, des alcansulfonates, des acides gras α-sulfonés, leurs esters d'acide carboxylique, des produits de sulfonation d'alcoylbenzènes, des alcènes ou des acides gras non saturés ainsi que leurs mélanges, le rapport en poids de l'alcoylglycoside selon la formule I au sulfate et/ou au sulfonate s'élevant de 200:1 à 20:1, et
- 37 % à 79,9 % en poids d'eau.

2. Produit selon la revendication 1, caractérisé en ce qu'il renferme de 40 à 70 % en poids, en particulier de 45 à 65 % en poids, d'eau, de 30 à 60 % en poids, en particulier de 35 à 55 % en poids, d'alcoylglycoside selon la formule I et de 0,2 à 2 % en poids, en particulier de 0,5 à 1 % en poids de sulfate et/ou de sulfonate.

3. Produit selon la revendication 1 ou 2, caractérisé en ce qu'il renferme un alcoylglycoside selon la formule I et un sulfate et/ou un sulfonate dans le rapport de poids allant de 100:1 à 50:1.

4. Produit selon l'une des revendications 1 à 3, caractérisé en ce qu'il renferme un sulfate tensioactif d'un alcool éventuellement éthoxylé selon la formule II :
R -O-(CH₂CH₂O)ₚ-SO₃X (II)
dans laquelle R signifie un radical alcoyle ayant de 12 à 22 atomes de carbone, p un nombre allant de 0 à 20 et X un ion de métal alcalin ou d'ammonium.

5. Produit selon l'une des revendications 1 à 4, caractérisé en ce que l'alcoylglycoside de formule I possède un degré d'oligomérisation n en dessous de 1,5 et en particulier allant de 1,2 à 1,4.

6. Produit selon l'une des revendications 1 à 5, caractérisé en ce que l'alcoylglycoside de formule I est un alcoylglucoside.

7. Produit selon l'une des revendications 4 à 6, caractérisé en ce que le sulfate de formule II possède un radical alcoyle R ayant de 12 à 16 atomes de carbone.

8. Produit selon l'une des revendications 4 à 7, caractérisé en ce que le sulfate de formule II possède un degré d'éthoxylation p allant de 1 à 5.

9. Utilisation du produit selon l'une des revendications 1 à 8, comme prémélange stable au stockage, apte à l'écoulement et au pompage, pour la production de produits de lavage et de nettoyage liquides.
